# EUROPEAN PATENT APPLICATION

(11) **EP 3 913 563 A1**
(43) Date of publication of application: **24.11.2021**
(21) Application number: 21175452.8
(22) Date of filing: 21.05.2021
(51) Int. Cl.: G06Q 30/06, G06Q 50/12, G06Q 20/32

(54) **METHOD OF PROVIDING A SHARED LOCATION-SPECIFIC SESSION FOR A PLURALITY OF USER DEVICES**

(30) Priority: 22.05.2020 GB 202007730
(71) Applicant: Soho Technologies Ltd, London Greater London W1H 1DP (GB)
(72) Inventor: BUTLER, Carlos, London, W1H 1DP (GB)
(74) Representative: Thoma, Maximilian Henry

(57) **Abstract**

There is provided a method of providing a shared location-specific session for a plurality of user devices; comprising: providing an identifier, such as a physical identifier at a location; using a plurality of user devices, accessing information related to the identifier; and associating the plurality of user devices with a shared session based on said information. A corresponding system and a server are also provided.

## Description

### Field of Invention

This invention relates to a computer implemented method of providing a shared location-specific session for a plurality of user devices (i.e. associating users with a joint session associated with a location).

### Background

Known electronic point-of-sale systems provide a physical identifier, such as a near-field communication (NFC) tag, with which a user can interact using a smartphone to begin ordering goods or services.

For example, it is known to provide in a food court a selection of NFC tags, each associated with a restaurant in the food court. A user who wishes to order from one of the restaurants can interact with the NFC reader associated with that restaurant using a user device, such as a smartphone. The interaction with the NFC reader prompts the smartphone to access a software application associated with that restaurant through which a user may place their order.

However, such systems are unsuitable for dealing with multiple orders from a single user, or from multiple related orders between a group of users.

### Summary of the Invention

Aspects and embodiments of the present invention are set out in the appended claims. These and other aspects and embodiments of the invention are also described herein.

According to one aspect of the present invention, there is provided a method of providing a shared location-specific session for a plurality of user devices; comprising: providing an identifier, such as a physical identifier at a location; using a plurality of (separate) user devices, accessing information related to the identifier (.e. the same identifier); and associating the plurality of user devices with a shared session based on said information. The user devices are typically owned/controlled by different users. The identifier identifies a location, rather than a particular item.

The method may comprise, upon accessing said information via a first user device, beginning a session.

The method may comprise, upon accessing said information via one or more further user devices, associating the one or more further user devices with the session.

The method may comprise, upon accessing said information using a user device, determining whether a session is in progress. The determination may take place as the user device is accessing information (i.e. as a webpage is loading).

The method may comprise beginning a new session or joining an existing session on dependence of the result of the determination.

The information may comprise one of: information associated with the identifier; or the identifier itself.

The information may comprise a pointer to a database such as a uniform resource identifier (URI).

The URI may comprise a unique component associated with the location. The unique component may be randomly generated.

The method may comprise associating the unique component of the URI with the location; and storing a record of the association of the URI with the location.

The method may comprise accessing said record upon accessing the URI.

The method may comprise determining the location of the identifier from said record upon accessing said record. The determination may take place as the user device is accessing the URI (i.e. as the associated webpage is loading).

The URI may be accessed via a web browser of the user devices.

The identifier may provide the information using a plurality of different communication media; preferably wherein each communication media provides information relating to variants of the same URI; more preferably wherein the variants of the same URI lead to the same webpage. The variants of the URI accessed by user devices may be tracked, thereby to allow analytics to take place.

The identifier may comprise at least one of, preferably all of: a near-field communication (NFC) tag; a quick response (QR) code; a Bluetooth® Low Energy (BLE) tag; and/or a printed uniform resource identifier (URI).

The physical identifier may comprise a physical medium in which the NFC tag is embedded, and/or on which the QR code and/or the URI are printed; preferably wherein the user devices comprise an NFC reader and/or a QR code scanner for interacting with the physical identifier.

The session may relate to an account for ordering items.

The account may be simultaneously accessible by each of the user devices.

The method may comprise placing one or more orders (preferably relating to one or more items) from one or more of the plurality of user devices associated with the session.

Each order may be specific to a particular user device.

The method may comprise adding items to the account from each of the plurality of user devices associated with the session.

The method may comprise associating a location with each of the at least one or more items, and transmitting information about each of the one or more items to a device at the location associated with the item, preferably wherein the device is a printer configured to print a ticket comprising said information.

The method may comprise classifying each of the one or more items into a class, and grouping the items according to the class, preferably wherein information about each of the one or more items is transmitted to a device grouped according to said class, more preferably wherein the device is a printer and is configured to print a ticket in respect of each of said classes, said ticket(s) comprising information about the items in that class.

The method may comprise paying, via one or more of the plurality of user devices, thereby to settle the account.

The method may comprise ending the session upon said paying.

The location may relate to the location of a table in a restaurant.

According to another aspect of the present invention, there is provided a system for providing a shared location-specific session for a plurality of user devices; comprising: an identifier, such as a physical identifier at a location; a plurality of user devices, being capable of accessing information related to the identifier; wherein the plurality of user devices are capable of being associated with a shared session based on said information.

According to another aspect of the present invention, there is provided a system for providing a shared location-specific session for a plurality of user devices; configured to perform the method described herein.

According to another aspect of the present invention, there is provided a server for providing a shared location-specific session for a plurality of user devices; the server being configured to associate a plurality of user devices with a shared session based on information accessed by the plurality of user devices, the information being related to an identifier, such as a physical identifier at a location.

Any apparatus feature as described herein may also be provided as a method feature, and vice versa. As used herein, means plus function features may be expressed alternatively in terms of their corresponding structure.

Any feature in one aspect of the invention may be applied to other aspects of the invention, in any appropriate combination. In particular, method aspects may be applied to apparatus aspects, and vice versa. Furthermore, any, some and/or all features in one aspect can be applied to any, some and/or all features in any other aspect, in any appropriate combination. It should also be appreciated that particular combinations of the various features described and defined in any aspects of the invention can be implemented and/or supplied and/or used independently.

As used herein, the word 'session' preferably connotes a temporary and interactive information interchange between two or more communicating devices; more preferably a session between a plurality of user devices and a server. The session may take place over the internet, using one or more known information transmission technologies (Wi-Fi®, Bluetooth®, GSM, etc.). Data for the session is preferably stored at a server and/or locally on the user devices.

As used herein, the term 'tab' preferably connotes to a register of good or services; more preferably including a statement of money owed for good or services. As used herein, the terms 'tab', 'bill', and 'account' should be understood to be synonymous.

As used herein, the term '(physical) identifier' preferably connotes a physical object which identifies a location; more preferably wherein the identifier provides or encodes information identifying the location; still more preferably wherein the identifier is an object which conveys information using electronic processing means; yet more preferably wherein the identifier is an object which conveys information using a plurality of different electronic processing means. The identifier may be a 'card' (or similar), for ease of location and re-positioning.

As used herein, the term 'uniform resource identifier' or 'URI' preferably connotes a string of characters used to identify a resource on a computer network, of which the best known type is the web address or URL. For completeness, we note that as referred to herein a 'uniform resource identifier' is distinct from the described '(physical) identifier'.

As used herein, the term 'user device' refers to a portable computing device such as a smartphone or tablet computer.

The invention also provides a computer program or a computer program product for carrying out any of the methods described herein, and/or for embodying any of the apparatus features described herein, and a computer readable medium having stored thereon a program for carrying out any of the methods described herein and/or for embodying any of the apparatus features described herein.

The invention also provides a signal embodying a computer program or a computer program product for carrying out any of the methods described herein, and/or for embodying any of the apparatus features described herein, a method of transmitting such a signal, and a computer product having an operating system which supports a computer program for carrying out the methods described herein and/or for embodying any of the apparatus features described herein.

Any feature in one aspect of the invention may be applied to other aspects of the invention, in any appropriate combination. In particular, method aspects may be applied to apparatus aspects, and vice versa. As used herein, means plus function features may be expressed alternatively in terms of their corresponding structure, such as a suitably programmed processor and associated memory.

Furthermore, features implanted in hardware may generally be implemented in software, and vice versa. Any reference to software and hardware features herein should be construed accordingly.

The invention extends to methods, system and apparatus substantially as herein described and/or as illustrated with reference to the accompanying figures.

One or more aspects will now be described, by way of example only and with reference to the accompanying drawings having like-reference numerals, in which:
Figure 1 is an example of a known system;
Figure 2 is a system of the present invention;
Figure 3 is a flowchart showing a method of the present invention;
Figure 4 is a flowchart showing the method of the present invention for use in an electronic point-of-sale system for a food outlet;
Figure 5 is an electronic point-of-sale system for implementing the method of Figure 4; and
Figure 6 is a photograph of two exemplary physical identifiers.

### Detailed description

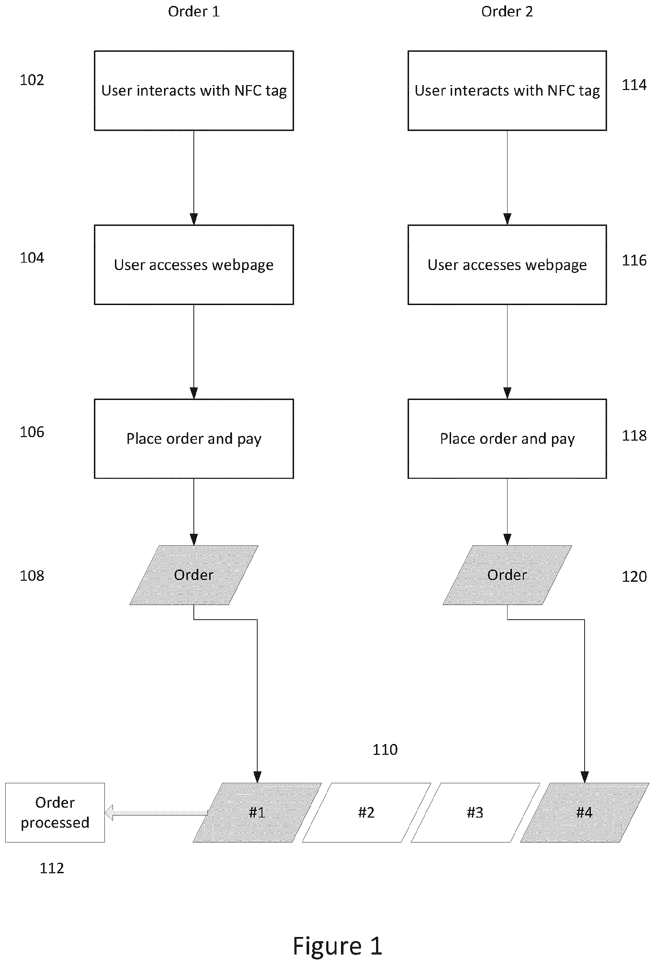

Figure 1 is an example of a known system for use for example in a food court. A first order is made when a user interacts with an NFC tag using a user device such as a smartphone at step 102. The interaction causes a page to open on a software application of the smartphone at 104 through which the user places and pays for the order at step 106. This first order 108 is placed in an order queue 110 to be processed by the food outlet 112. A second order is made when a user interacts with the NFC tag via a smartphone at step 114 to access the page at step 116 and places and pays for the order at step 118. This second order 120 is also placed in the order queue 110.

This system is unsuitable for handing multiple orders from a single user, or from multiple related orders between a group of users. In the former case, where the two orders in Figure 1 are placed by the same user (for example two courses), the user must pay each time a new item is ordered, which is onerous for the user and for the food outlet. In the latter case, where the two orders in Figure 1 are placed by the members of the same table, there will be an undesirable delay between one member receiving the food and the second member receiving their food because the orders will be treated independently by the food outlet and are likely to be separated in the order queue.

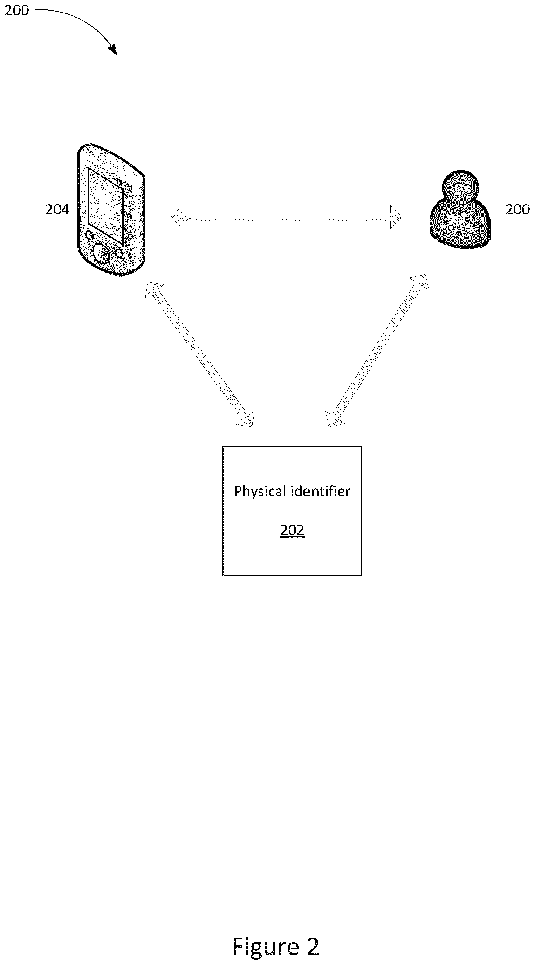

Referring to Figure 2, according to the present invention a user 200 is provided with a physical identifier 202 which is associated with a location. The physical identifier 202 provides information which is unique to the location, and which is accessible to the user 200 optionally following the user interacting with the physical identifier 202 via a user device 204. The information is a uniform resource identifier (URI), unique to the location of the physical identifier, which is stored, encoded and/or printed on the physical identifier 202. The physical identifier 202 in this example comprises one or more of: a near-field communication (NFC) tag having the URI stored on it; a quick response (QR) code encoding the URI; or a physical; object having a URI, such as a uniform resource locator (URL), printed on it. For example, the physical identifier 202 may be a physical card having an embedded NFC tag, and a QR code and a URL printed on it. It will be appreciated that other technologies for conveying information to a user device may also be used.

The NFC tag, QR code, and URI are unique for a particular physical location. For example, a different physical identifier 202 may be placed on each table in a restaurant, with each physical identifier 202 having an NFC tag, QR code, or URI that is unique to the table on which it is placed.

The user 200 interacts with the physical identifier 202 via a user device 204. In this example the user device 204 is a smartphone with an in-built NFC reader capable of interacting with the NFC tag in the physical identifier 202, a camera and associated software capable of reading the QR code printed on the physical identifier 202, and/or means receiving input of the URL printed on the physical identifier 202, such as an internet browser.

If the physical identifier 202 comprises an NFC tag, the user 200 may position the user device 204 next to the physical identifier 202 so that the in-built NFC reader of the user device 204 reads the NFC tag. If the physical identifier 202 comprises a QR code printed on it, the user 200 may use a QR reader or built-in camera app of the user device 204 to scan the QR code. If the physical identifier 202 comprises a URI printed on it, the user 200 may read the URI and manually type it into a web browser of the user device 204 or use a camera of the user device 204 to scan the URI. This may allow a user to access the identifier 202 in various different ways depending on the capability of their user device - as a minimum, a user may simply type the URI into their web browser.

In any case, the user 200 interacting with the physical identifier 202 via the user device 204 causes the user device 204 to open a webpage on the web browser of the user device 204 which is unique to a particular location. Advantageously, the present invention does not require a bespoke software application ("app") to be pre-installed on the user device.

It will be understood that the physical identifier 202 could incorporate other means for providing information to the user 200 (instead of or as well as the NFC tag, QR code, and URL), such as by storing the information on the physical identifier or encoding the information on the physical identifier. For example, the physical identifier can use a Bluetooth® Low Energy (BLE) tag, a radio-frequency identification tag, or a barcode.

Preferably, the information is provided by the physical identifier in a way that can be conveniently accessed by the user. For this reason, NFC tags, BLE tags, and/or QR codes are most preferable because widely available user devices, such as smartphones, are typically provided with means for accessing information stored or encoded in this way. Similarly, it is preferable always to include a printed URI on the physical identifier (regardless of whether an NFC tag, BLE tag, and/or QR code is also provided) because, even if a user device does not have means for accessing information stored or encoded in this way, it will as a minimum be provided with means for receiving a URI, such as a web browser.

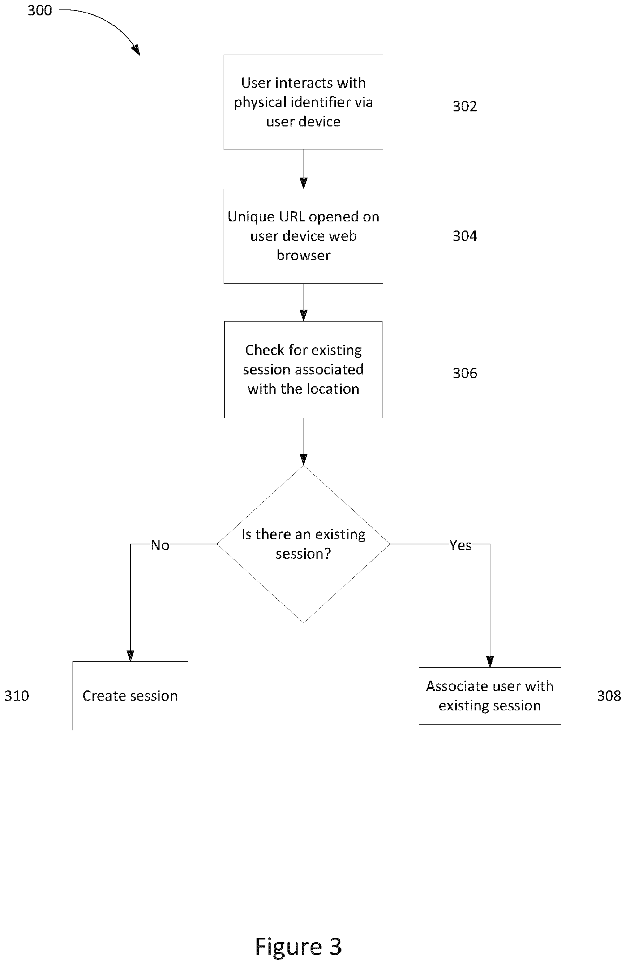

Figure 3 is a flowchart showing the method 300 of using the present invention.

At step 302, a user interacts with the physical identifier via a user device as explained above with reference to Figure 2. At step 304, the interaction with the physical identifier causes the user device to open a webpage on the web browser of the user device. The URI leading to the webpage is unique to the particular location that is associated with the physical identifier.

At step 306, the system checks whether there is an existing session associated with the particular location that is associated with the physical identifier. If so, the user is associated that existing session at step 308. If not, at step 310 the system creates a new session associated with the physical location that is associated with the physical identifier. The session is accessed via the webpage identified by the URI, and is between the user device - or plurality of user devices - and a server (providing the webpage). As will be appreciated, the webpage is not static, and instead is updated throughout the session (preferably without being reloaded).

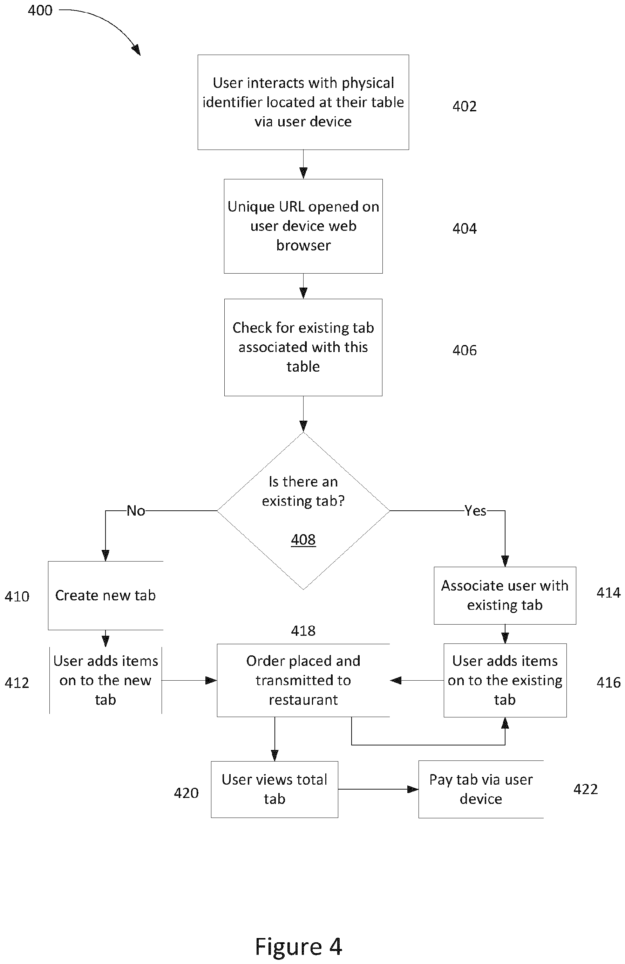

This method can be applied for example for use in an electronic point-of-sale system for a restaurant, as shown in Figure 4.

Referring to Figure 4, at step 402 a user interacts with a physical identifier. In this example the physical identifier is a card having an NFC tag embedded within it, and a QR code and a URL printed on it. The user interacts with the NFC tag, QR code, or URL via a smartphone as described above with reference to Figure 2.

At step 404, the user interaction with the card causes a URI to be accessed via the web browser of the smartphone. As the card is associated with a particular table in a particular restaurant (and is unique to that table), the unique URI opens a page on the web browser of the user's smartphone to display that restaurant's menu. The user browses the menu and selects the items that they wish to order.

At step 406, the system checks whether or not there is an existing tab (or 'account', or 'bill') open for the table associated with the card (i.e. whether a session is in progress). If a tab for this table is not already open, the system creates a new tab for this table at step 410 and the user may begin adding items to this new tab at step 412. If a tab for this table is already open, for example because another member of the table has previously interacted with the card and created a tab, the user is associated with the existing open tab at step 414 and the user can begin adding items to this existing tab at step 416. This may allow all users at the table to interface with the same tab, which may improve visibility of the items on the tab and may improve ease of use (since there is no need e.g. to coordinate such that a single user places and pays for all the orders, and then to coordinate such that the user that paid is paid back by other users).

Each member of the table interacts with the card on the table as described and is associated with the tab for that table. Each member of the table is therefore able individually to add items to the tab. When all desired items have been added to the tab by the members of the table, a single order may be placed for all items on that tab at step 418. Advantageously, this means that a single order may be placed for multiple items added to the tab by different members of the same table. This means that those items will be treated by the restaurant as a single order. In addition, where multiple members of a table are associated with a joint tab, multiple orders may be placed by different members of the table, with each order being added to the joint tab. Each order is transmitted to the restaurant along with information identifying the table associated with the card. The restaurant prepares the food and brings it to the identified table. If additional food items are desired, the members of the table can each add new items to the tab and a new order is placed for additional items (steps 416 and 418). Alternatively, each device may process orders separately (i.e. each device handles a single order), where multiple orders may be associated with the tab. This may mitigate confusion in the situation where multiple users seek to add or remove various items (i.e. users do not need to coordinate amongst themselves to modify a single order correctly).

Each member of the table is able to view the items on the tab at step 420 and when no further items are desired the tab is paid via the user device at step 422. For example, each member of the table may pay for the items that they have added to the tab, or two users (out of a table of any size) may choose to pay half of the total cost of the tab each. The user may be provided with an option to pay part or all of the cost of the tab via the web browser. Alternatively or additionally, the system can be configured to send an SMS, email or other electronic communication to a user containing an internet link unique to their order. Following this link, the user can access a webpage by which they can pay the cost of their tab.

The tab can be arranged to automatically close once it has been paid in full so that the physical identifier card can be used again to open a new tab for a new table. Alternatively, the tab may remain open after payment so that, for example, one member of the table can pay for some items while the other members of the table can continue to order additional items.

The system has been described above with reference to a group of customers at a table in a restaurant. However, the system can equally be used by a group of customers who are queuing to enter a restaurant. In this case, a user can interact with a physical identifier located, for example, beside the entrance to the restaurant, to load a webpage (as described above). Through the webpage the user joins a virtual queue to enter the restaurant. In joining the virtual queue, the user provides their contact information. When the user is positioned into a virtual queue, the system is configured to send an electronic communication to the user (such as an email or SMS using the contact information provided by the user)_to confirm the user's position in the queue. Without the need to interact again with the physical identifier, or needing to scan anything else, the user can load the menu(s) of the restaurant they are queuing to enter and place an order for the restaurant (as described above). Optionally, the user pays for the order before the order is accepted by the restaurant. In this way, when the user reaches the front of the queue and is given a table at the restaurant, their food is already being, or has been, prepared by the restaurant.

When an order is placed for items that have been added to the tab, information about that order is transmitted to the restaurant to enable the restaurant to prepare the items. For example, information identifying the particular items that have been ordered (such as the name of a dish, or a number identifying a dish), the quantities of each item, and the table from which the items have been ordered is transmitted to the restaurant. The information may then be digitally displayed to restaurant staff to enable the staff to prepare the items that have been ordered. Alternatively or additionally, the information about the order may be transmitted to a printer which is configured to print a physical order ticket showing the information about the order to enable the staff to prepare the items.

The information about the order that is transmitted to the restaurant may contain additional information associated with one or more of the items comprised within the order which can be used by the restaurant to process the order more efficiently.

First, the information transmitted to the restaurant preferably contains information about the location in the restaurant at which one or more of the items in the order will be prepared. For example, if an order contains a first type of item (such as a main meal) that is prepared at a first location in the restaurant (such as a main kitchen), the information transmitted to the restaurant includes information associated with that item which identifies that location. This enables information about that item in the order to be distributed to the location in the restaurant at which it will be prepared. For example, if a restaurant prepares main meal items in a main kitchen, dessert items in a front-of-house dessert station, and drinks at a bar, the information about main meal items in an order can be distributed to the main kitchen, information about dessert items in an order can be distributed to the front-of-house dessert station, and information about drink items in an order can be distributed to the bar. The information is distributed to the appropriate location by being transmitted to a device at that location, such as a computer which displays the information via a screen or a printer which prints the information on a ticket. In this way, information about the order reaches the appropriate location efficiently.

In the case where the information about the order is printed on a physical order ticket, the information about an item on an order can be transmitted to a printer at the location at which that item will be prepared. For example, information about the main meal items on an order can be transmitted to a printer in the main kitchen, the information about the dessert items can be transmitted to a printer at the front-of-house dessert station, and the information about the drink items can be transmitted to a printer at the bar. The ticket is then printed by the printer in the respective location. Preferably, a printer at a particular location is configured to print only information relating to items prepared at that location (for example, a printer at the bar is configured only to print information about drinks items). In this way, the order tickets printed in each location will not contain unnecessary information regarding items that are not prepared at that location.

Second, the information transmitted to the restaurant preferably contains information associating one or more items on an order with a class of items. Preferably, the classes of the items correspond to courses of a meal. For example, the system assigns one course number (such as "course 1") to starter items on a menu and another course number (such as "course 2") to main meal items on a menu, and so on. Such course numbers might represent starter, main, or dessert courses. This information enables system to group items in an order according to their assigned course number. In this way the restaurant can stagger preparation of the items according to their assigned course number regardless of whether the items were ordered together in a single order, or in multiple orders from users at the same table.

In one example, when an order is placed, the information about the order passes through a course classifier. The course classifier is configured to classify each item on the order into one of a preset number of classes, where each class preferably corresponds to a particular course of a meal. For example, if the order comprises a starter item, a main meal item, and a dessert item, the course classifier will classify the starter item into a first class ("course 1"), the main meal item into a second class ("course 2"), and the dessert item into a third class ("course 3"). The classification of each item into a course is based on checking each item on the order against a database which stores the course number assigned to each item on a restaurant's menu. Alternatively, the user might be asked to indicate, when adding an item to the order, the course with which they would like to receive that item. The course classifier may be implemented as a software module in an electronic point-of-sale system, or alternatively may be implemented at a remote server (where information about the order is sent to the remote server via an internet connection).

The system is further configured to generate order tickets corresponding to each of the courses that make up an order. For example, it the order comprises some starter items, some main meal items, and some desserts (which are classified by the course classifier into their respective courses), the system is configured to generate a first order ticket consisting of the starter items, a second order ticket consisting of the main meal items, and a third ticket consisting of the dessert items. The respective order tickets can be digitally displayed to the restaurant staff preparing the order, and/or can be printed as physical order tickets for the staff. For example, the system may be configured to print a first ticket showing information about the items in an order assigned to a first course, and to print a second subsequent ticket showing information about the items assigned to a second course.

In this way, the information about the order is split up according to the course information before it is provided to the restaurant staff preparing the order. This enables more efficient preparation of the meals by the restaurant by enabling the staff to quickly identify the items relating to each individual course and thus the items which should be prepared together. In order to stagger the preparation of courses, the system can optionally require a restaurant staff member to provide an input to the system in order to print the tickets corresponding to each course. For example, the system may be configured to print automatically the ticket corresponding to the first course, however the system may require user input (such as pressing a button) in order for the system to print the ticket relating to the second course. Thereby, the staff preparing the items will only receive the ticket relating to the second course once they have finished preparing the first course and are ready to begin preparing the second course.

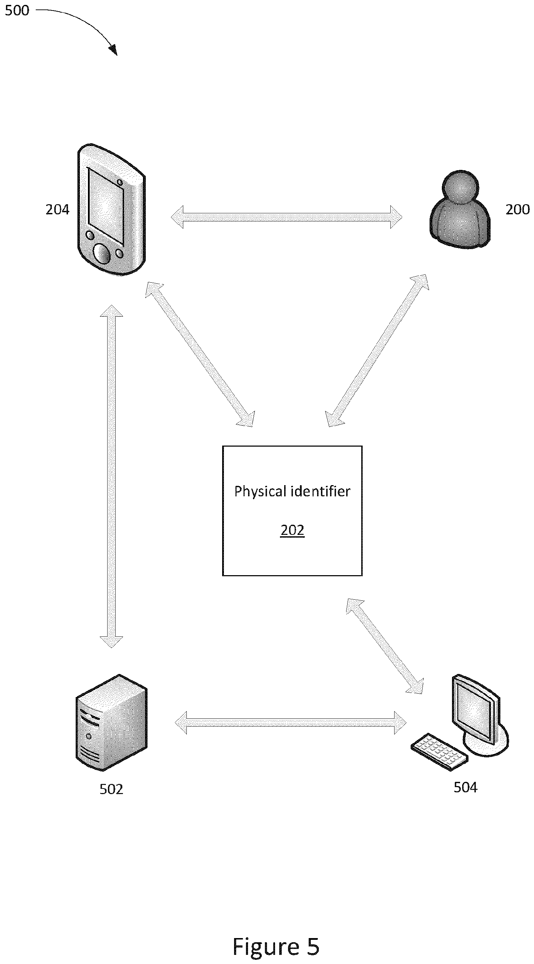

Figure 5 is an electronic point-of-sale system 500 for implementing the method of Figure 4.

A user 200 is provided with a physical identifier 202 which is associated with a table in a restaurant. The physical identifier 202 in this example is a card comprising an embedded NFC tag, and having a QR code and URI printed on it. In one example, the NFC tag stores a URL, and the QR encodes a URI that is identical to the URI printed on the card; such as "https://ordr.menu/ABC123". In an alternative example, NFC tag stores a URI, and the QR code encodes a URI that is a variant of the printed URI. For example, if the printed URI is "https://ordr.menu/ABC123", the NFC tag stores a variant of this URI "https://ordr.menu/ABC123?utm_source=nfc" and the QR code encodes another variant of this URI "https://ordr.menu/ABC123?utm_source=qr". The variants of the URI enable tracking of the usage rates of each of the NFC tag, printed QR code, and printed URI on the card so as to facilitate analytics.

In any case, the URIs printed on the card, stored in the card's NFC tag, or encoded by the QR code on the card, each comprise an identical component that is unique to the location of the physical identifier. In this example, each of the URI printed on the card, the URI stored by the NFC tag, and the URI encoded by the QR code contain the same 6-character string "ABC123" which is unique to the table with which the card is associated. The unique component of the URI is generated using a random character string generator programmed to produce the unique 6-character strings.

In this example, the unique component of the URI is 6-characters long and is made up of 3 letters (ABC) followed by 3 numbers (123). However, it will be understood that equivalent systems would also be suitable, such as systems using any mixture of letters, numbers and/or special characters, and using any number of characters in the string, so long as the string represents a combination of characters that is unique to the location of the physical identifier.

The server 502 has a database which stores a record of the restaurant tables with which each card is associated, for example the database might store the following information:

| **Restaurant** | **Table** | **Unique 6-character string** |
|---|---|---|
| 1 | Table 1 | DEF456 |
| | Table 2 | GHI789 |
| | Table 3 | JKL123 |
| 2 | Table 1 | MNO456 |
| | Table 2 | PQR789 |
| | Table 3 | STU012 |
| | Table 4 | VWX345 |

In this example, two separate restaurants (Restaurant 1 and Restaurant 2) are using the system 500. Restaurant 1 has three tables and Restaurant 2 has four. For each table a unique 6-character string is generated and assigned to that table and recorded in the database. Thus, the physical identifier card associated with Table 1 in Restaurant 1 has the URI "https://ordr.menu/DEF456" printed on it (and stored in the embedded NFC tag and encoded in the QR code printed on the card) and so on for the other tables and restaurants. Rather than storing the 6-character string, the database may store the entire URI comprising the 6-character string associated with each table.

The user 200 interacts with the card via a user device 204, such as a smartphone, as described previously. This interaction causes the user device 204 to open the unique URI on the web browser of the user device 204. When the unique URL is opened in the web browser, the user device 204 communicates with a server 502. The server 502 identifies the 6-character string contained in the unique URI and searches the database to identify the restaurant and table associated with that 6-character string. For example, if a user interaction with a physical identifier 202 causes the user device 204 will access the URI "https://ordr.menu/STU012" in the browser of the user device, the system will access the database to identify which table at which restaurant is associated with "STU012" (and will in this example identify Table 3 of Restaurant 2).

The server 502 then checks whether there is an existing tab associated with that table. This check happens as the user device 204 is loading the URI. If there is no existing tab, the server 502 generates a new tab on the server (for example "BILL001") and redirects the browser of the user device to a new URI associated with the new tab (for example "ordr.menu/bills/BILL001"). If there is an existing tab on the server (for example "BILL002"), the server 502 associates the user device 204 with that existing tab and redirects the browser of the user device to the URI for that tab (for example "ordr.menu/bills/BILL002").

The user device 204 then displays the menu for the restaurant with which the 6-character string is associated, and the user 200 selects items from the menu and adds those items to the tab. The items selected by the user 200 are communicated to the server 502 which maintains a record of the items added to the tab. This process is repeated by each member of a table, each using their respective smartphones (user devices), so that each member of the table is able to view and add items to a single joint tab.

The user device 204 and the server 502 communicate via WebSocket. This enables near-immediate two-way communication between the user device 204 and the server 502. This is advantageous because when the system is used by multiple members of a table, an item/order added to the joint tab by one member is near-immediately visible to another member of the table viewing the joint tab.

The association of a 6-character string with a particular table (and therefore the association of a particular card with a particular table) can be permanent. In this case, the 6-character string is only ever associated with one particular table in the server 502 database, and card corresponding to that 6-character string is only ever located on one particular table. The card could therefore be fixed to the table so that it is not lost or removed from the restaurant.

Alternatively, each card could be continually re-assigned to a new table with each use. In this example, the system includes a computer 504 located for example in the restaurant. The computer 504 has at least a web browser and preferably an NFC reader and/or QR code scanner. When customers are seated at a particular table, the waiter selects a card and using the computer 504 enters the URI printed on the card into the web browser (or using the NFC reader or QR code scanner, reads the NFC tag or scans the QR code of the card). The waiter enters into the computer 504 the number of the table at which the customers have been seated. The computer 504 then communicates with the server 502 to assign the card's unique 6-character string to that table in the database. The waiter than provides the card to the members of the table for use as described above. When the customers have left the restaurant, the waiter retrieves the card and again uses the computer 504 to enter the card's URI into the web browser. The computer 504 communicates with the server 502 to either overwrite the database entry for the card so as to associate the card with a different table, or the clear the database entry so that the card is no longer associated with any table. Alternatively, such re-assignment of cards to tables could happen only occasionally - for example when the table layout in the restaurant is altered.

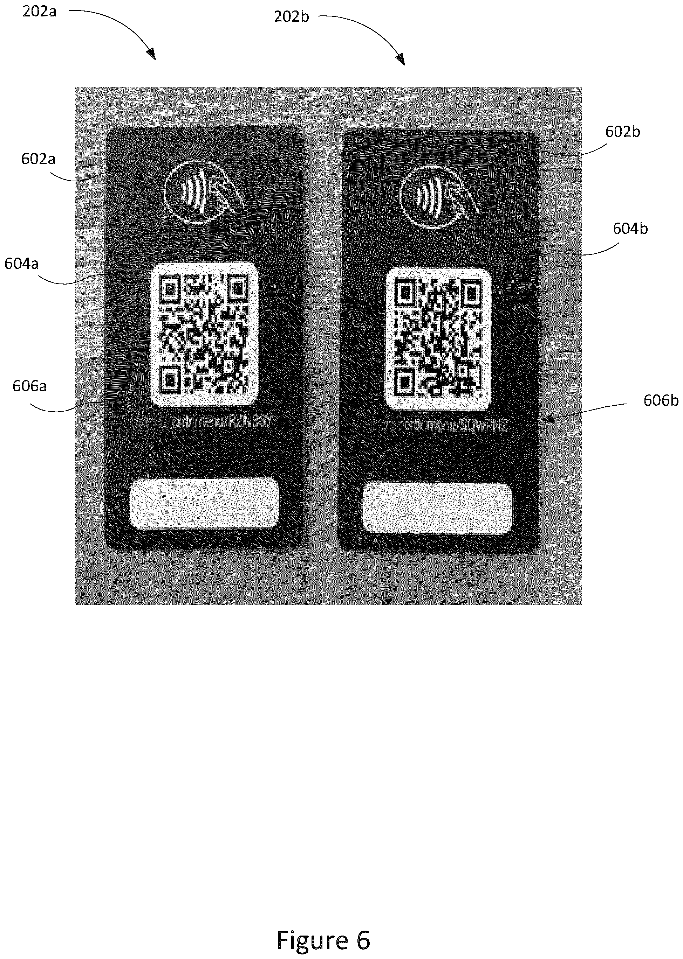

Figure 6 is a photograph of two exemplary physical identifiers 202a and 202b. The physical identifiers 202a and 202b are cards, each having: an embedded NFC tag 602a and 602b; a QR code 604a and 604b printed on it; and a URL 606a and 606b also printed on it. The two cards are unique in that the URLs printed on them (and stored in the NFC tag and encoded in the QR code) are unique. The randomly generated unique 6-character string is visible: RZNBSY for the first card and SQWPNZ for the second card.

The system has been described above with reference to physical identifiers located on a particular table in a restaurant. However, the system could equally be used in the context of takeaway or delivery meals. In this case, the user might arrive at a takeaway restaurant and place an order using a physical identifier (as described above) and then collect the order when it is ready. Equally, the user might be located away from the restaurant and place an order using a physical identifier (as described above) located away from the restaurant; the order can then be delivered from the restaurant to the user based on a known location of the physical identifier.

In addition, the system described above can be used for other purposes beyond ordering food in a restaurant. In one such example, a physical identifier can be provided to a customer in a hotel or an event venue. In this examiner, a customer is given a physical identifier card when they check in to a hotel or venue so that at any point during their visit or stay they can place an order for goods or services. To inform the establishment of their location in the venue, a predetermined list of locations will appear whenever a user places an order (for example "outdoor garden", "hotel room", "spa", etc) from which a user can select their location. The selected location will be associated with the user's order so the venue or hotel can send the waiter to that location. In this example, the system may additionally be configured to facilitate: payments of the orders made using the system; payments on checking in or out of a venue for the cost of the stay at the venue; or payments deducted from a pre-paid balance (for example a balance added when the user reaches the venue). Equally, the physical identifier card could be used as the security key, for example to open the door to the hotel room or to pass through doors and security in a venue.

It will be understood that the invention has been described above purely by way of example, and modifications of detail can be made within the scope of the invention.

Each feature disclosed in the description, and (where appropriate) the claims and drawings may be provided independently or in any appropriate combination.

Reference numerals appearing in the claims are by way of illustration only and shall have no limiting effect on the scope of the claims.

## Claims

1. A method of providing a shared location-specific session for a plurality of user devices; comprising:
providing an identifier, such as a physical identifier at a location;
using a plurality of user devices, accessing information related to the identifier; and
associating the plurality of user devices with a shared session based on said information.

2. A method according to Claim 1, wherein the method comprises, upon accessing said information via a first user device, beginning a session, preferably wherein the method comprises, upon accessing said information via one or more further user devices, associating the one or more further user devices with the session.

3. A method according to any preceding claim, wherein the method comprises, upon accessing said information using a user device, determining whether a session is in progress, preferably wherein the method comprises beginning a new session or joining an existing session on dependence of the result of the determination.

4. A method according to any preceding claim, wherein the information comprises one of: information associated with the identifier; or the identifier itself.

5. A method according to any preceding claim, wherein the information comprises a pointer to a database such as a uniform resource identifier (URI), preferably wherein the URI comprises a unique component associated with the location, more preferably wherein the method comprises associating the unique component of the URI with the location; and storing a record of the association of the URI with the location, yet more preferably wherein the method comprises accessing said record upon accessing the URI, still more preferably wherein the method comprises determining the location of the identifier from said record upon accessing said record.

6. A method according to Claim 5, wherein the URI is accessed via a web browser of the user devices.

7. A method according to any preceding claim, wherein the identifier provides the information using a plurality of different communication media; preferably wherein each communication media provides information relating to variants of the same URI; more preferably wherein the variants of the same URI lead to the same webpage.

8. A method according to any preceding claim, wherein the identifier comprises at least one of, preferably all of: a near-field communication (NFC) tag; a quick response (QR) code; a Bluetooth® Low Energy (BLE) tag; and/or a printed uniform resource identifier (URI), preferably wherein the physical identifier comprises a physical medium in which the NFC tag is embedded, and/or on which the QR code and/or the URI are printed; preferably wherein the user devices comprise an NFC reader and/or a QR code scanner for interacting with the physical identifier.

9. A method according to any preceding claim, wherein the session relates to an account for ordering items, preferably wherein the account is simultaneously accessible by each of the user devices, and more preferably wherein the method comprises placing one or more orders (preferably relating to one or more items) from one or more of the plurality of user devices associated with the session; preferably wherein each order is specific to a particular user device, and yet more preferably wherein the method comprises adding items to the account from each of the plurality of user devices associated with the session.

10. A method according to Claim 9, comprising associating a location with each of the at least one or more items, and transmitting information about each of the one or more items to a device at the location associated with the item, preferably wherein the device is a printer configured to print a ticket comprising said information.

11. A method according to Claims 9 or 10, comprising classifying each of the one or more items into a class, and grouping the items according to the class, preferably wherein information about each of the one or more items is transmitted to a device grouped according to said class, more preferably wherein the device is a printer and is configured to print a ticket in respect of each of said classes, said ticket(s) comprising information about the items in that class.

12. A method according to any of Claims 9 to 11, further comprising paying, via one or more of the plurality of user devices, thereby to settle the account, and preferably ending the session upon said paying.

13. A system for providing a shared location-specific session for a plurality of user devices; comprising:
an identifier, such as a physical identifier at a location;
a plurality of user devices, being capable of accessing information related to the identifier;
wherein the plurality of user devices are capable of being associated with a shared session based on said information.

14. A system for providing a shared location-specific session for a plurality of user devices; configured to perform the method of any of Claims 1 to 12.

15. A server for providing a shared location-specific session for a plurality of user devices; the server being configured to associate a plurality of user devices with a shared session based on information accessed by the plurality of user devices, the information being related to an identifier, such as a physical identifier at a location.
